# EUROPEAN PATENT APPLICATION

(11) **EP 2 048 380 A1**
(43) Date of publication of application: **15.04.2009**
(21) Application number: 07791134.5
(22) Date of filing: 23.07.2007
(51) Int. Cl.: F16B 7/04, E04B 1/58

(54) **JOINT FOR TUBE BODIES**

(30) Priority: 27.07.2006 JP 2006204826
(71) Applicant: Yazaki Kako Corporation, Shizuoka-shi, Shizuoka 422-8519 (JP)
(72) Inventor: MINOWA, Isamu, Shizuoka-shi, Shizuoka 422-8519 (JP); YAZAKI, Atsuhiko, Shizuoka-shi, Shizuoka 422-8519 (JP)
(74) Representative: Maury, Richard Philip
(86) International application number: PCT/JP2007/064401
(87) International publication number: WO 2008/013126

(57) **Abstract**

The present invention provides a internal pipe joints suitable for connection when pipes used under light-load conditions, or to be more concrete, plastic coated steel pipes having an external diameter ranging from about 28 mm to about 45 mm, which are produced by coating the outer surfaces of thin steel pipes with synthetic resin in a thin layer, are assembled into a planar or three-dimensional pipe structure, and more specifically, relates to pipe joints that have high strength in pipe connection and is excellent in design for having a simple appearance design in the position connecting the pipes.

The present invention comprises a joint body in which one or more connecting inset portions extending from the joint body and each inserted in an internal bore of a corresponding pipe to be connected are each formed to have a hollow structure, a plurality of long slit-like splits are formed in each of the connecting inset portions in a circumferential direction to axially extend from an end of the corresponding connecting inset portion, and the connecting inset portion is further provided in a hollow interior thereof with a tapered portion having an internal diameter decreasing from the end thereof toward the joint body; a tapered sleeve to be inserted in the hollow interior of the connecting inset portion; and a stop bolt having a conical portion in an end portion thereof.

## Description

### BACKGROUND OF THE INVENTION

### Field of the invention

The present invention relates mainly to the technical field of internal pipe joints suitable for connection (or linking) when pipes used under light-load conditions, or to be more concrete, plastic coated steel pipes having an external diameter ranging from about 28 mm to about 45 mm, which are produced by coating the outer surfaces of thin steel pipes with synthetic resin in a thin layer, are assembled into a planar or three-dimensional pipe structure, and more specifically, relates to pipe joints that have high strength in pipe connection and is excellent in design for having a simple appearance design in the position connecting the pipes.

### Description of the Related Art

As a joint for connecting pipes which assembles the pipes used under light-load conditions into a planar or three-dimensional pipe structure, an external joint in which a pipe is fitted to the socket of the joint has been conventionally known, for example, as disclosed in Japanese Design Registration No. 8811251 (hereinafter referred to as Patent Document 1). In this external joint, as seen in an enlarged sectional view in Patent Document 1, taken along line A--A', the socket of the joint has a diameter larger than the external diameter of a pipe, and a long length of the socket is exposed. Steps produced by the different diameters of the socket and the pipes make the socket (joint) conspicuous, so that the appearance design of the pipe connection part is ungainly. Furthermore, due to a simple structure in which the pipes are merely fitted to the socket of the joint, it is difficult to physically and reliably increase the strength of connecting the pipes even if adhesive is used to tightly fit the pipes to the joint. Besides that, a stepped area between the joint and each pipe is liable to gather dust and is difficult to clean by cleansing. This causes the problem that the above-mentioned joint is not suitable for use in a pipe structure that is used in a situation, such as food industry, where sanitary regulations are strict.

As disclosed in Japanese Unexamined Utility Model Publication No. 5-36114, in the case of an internal joint that is fitted to the internal bores of pipes, the joint in the pipe connection part is unnoticeable, which achieves a neat appearance design of the pipe connection part. However, due to a simple structure in which the pipes are merely fitted to the outer circumferences of the inset portions of the split joint, it is difficult to physically and reliably increase the strength of connecting the pipes even with adhesive.

A pipe connector disclosed in Japanese Patent No. 2894404 is also one type of internal joints to be fitted to the internal bores of pipes. This pipe connector has a structure in which a chevron washer to be pressed against and firmly fixed to the inner surface of a pipe is operated by using a bolt and a nut. It is therefore surmised that the strength of connecting pipes can be physically and surely increased. On the other hand, the joint body must have through holes for a bolt-rotating tool to tighten bolts. These noticeable through holes spoil the design of the joint, that is, the appearance design of the pipe connection part, and they are prone to gather dust. In addition, even a firmly fastened bolt cannot dispel the concern that it may come loose and fall out in a long in-service period.

### SUMMARY OF THE INVENTION

As seen in Japanese Patent No. 2894404, there have conventionally been various types of joints that physically and surely increase the strength of connecting pipes by using bolts or the like. These joints, however, raise the concern that the bolts may come loose and fall out in a long in-service period. For example, a joint cannot be used in food industry as long as there is the concern that a bolt may fall out and get mixed into the food as foreign material. Therefore, there has been a demand for modification and improvement that dispel this concern.

It is an object of the present invention to provide an internal joint having an excellent appearance design in a position connecting pipes. The pipe connection joint can be physically and surely increased in pipe-connecting strength to the necessary extent. Furthermore, in spite of using a bolt for pipe connection, there is no such concern that the bolt may come loose and fall out in a long in-service period, so that the joint is suitable for use even in food industry. At the same time, the pipes can be easily disconnected, which makes the joint excellent in recycling efficiency.

In order to solve the above-mentioned concern, a first aspect of the invention provides a pipe joint including a joint body 11 in which one or more connecting inset portions 12 extending from the joint body 11 and each inserted in an internal bore 1 a of a corresponding pipe to be connected 1 are each formed to have a hollow structure, a plurality of long slit-like splits 13 are formed in each of the connecting inset portions 12 in a circumferential direction to axially extend from an end of the corresponding connecting inset portion 12, and the connecting inset portion 12 is further provided in a hollow interior thereof with a tapered portion 14 with an internal diameter decreasing from the end thereof toward the joint body 11; a tapered sleeve 2 to be inserted in the hollow interior of the connecting inset portion 12; and a stop bolt 3 having a conical portion 3a in an end portion thereof, wherein the tapered sleeve 2 to be inserted in the hollow interior of the connecting inset portion 12 has a rear part in which a tapered portion for diameter expansion 20 is formed, which has a diameter smaller than an external diameter of the connecting inset portion 12 and is brought into internal contact with the tapered portion 14 formed in the hollow interior of the connecting inset portion 12, and the tapered sleeve 2 further has a front part in which a hole 21 to be inserted with the conical portion 3a of the stop bolt 3 is formed orthogonally to an axis of the tapered sleeve 2; wherein a screw hole 15 is formed in the joint body 11 orthogonally to an axis of the joint body 11, screw hole 15 being located in a position reached by the hole 21 of the tapered sleeve 2 that has been inserted in the hollow interior of the connecting inset portion 12 up to a given position but so as to be slightly misaligned in a direction of inserting the tapered sleeve 2; and wherein the tapered sleeve 2 is inserted in the hollow interior of the connecting inset portion 12 up to the given position; the connecting inset portion 12 is inserted in the internal bore 1a of the pipe to be connected 1; and the stop bolt 3 is put into the screw hole 15 of the joint body 11 to make the conical portion 3a of the stop bolt 3 enter the hole 21 of the tapered sleeve 2, with the result that the tapered sleeve 2 is pulled by an amount of the misalignment to increase the connecting inset portion 12 in diameter by wedge effect of the tapered portion for diameter expansion 20, and the pipe 1 is then crimped and fixed from the inside to be connected.

A second aspect of the invention provides the pipe joint 10 according to the first aspect, wherein the screw hole 15 formed in the joint body 11 is a non-through hole leading to the hole 21 of the tapered sleeve 2; the hole 21 of the tapered sleeve 2 is a tapered hole that follows the shape of the conical portion 3a of the stop bolt 3; and the stop bolt 3 has such length as to sink deep into an outer circumferential surface of the joint body 11 when the conical portion 3a is inserted into the tapered hole 21 of the tapered sleeve 2 to pull the tapered sleeve 2 by the amount of the misalignment.

A third aspect of the invention provides a pipe joint including a joint body 11 in which one or more connecting inset portions 12 extending from the joint body 11 and each inserted in an internal bore of a corresponding pipe to be connected 1 are each formed to have a hollow structure, a plurality of long slit-like splits are formed in each of the connecting inset portions 12 in a circumferential direction to axially extend from an end of the corresponding connecting inset portion 12, and the connecting inset portions 12 is further provided in a hollow interior thereof with a tapered portion 14 having an internal diameter that is gradually reduced from the end thereof toward the joint body; a tapered sleeve 2 to be inserted in the hollow interior of the corresponding connecting inset portion 12; and a stop bolt 3 having a conical portion 3a in an end portion thereof, wherein the tapered sleeve 2 to be inserted in the hollow interior of the connecting inset portion 12 has a rear part in which a tapered portion for diameter expansion 20 is formed, which has a diameter smaller than an external diameter of the connecting inset portion 12 and is brought into internal contact with the tapered portion 14 formed in the hollow interior of the connecting inset portion 12, and the tapered sleeve 2 further has a front part in which a hole 21 to be inserted with the conical portion 3a of the stop bolt 3 is formed orthogonally to an axis of the tapered sleeve 2; wherein a screw hole 16 is formed in the connecting inset portion orthogonally to an axis of the connecting inset portion 12, the screw hole 16 being located in a position reached by the hole 21 of the tapered sleeve 2 that has been inserted in the hollow interior of the connecting inset portion up to a given position but so as to be slightly misaligned in a direction of inserting the tapered sleeve 2; and wherein the tapered sleeve 2 is inserted in the hollow interior of the connecting inset portion 12 up to the given position; the stop bolt 3 is put into the screw hole 16 of the connecting inset portion 12 until sinking into an outer circumferential surface of the connecting inset portion; the connecting inset portion 12 is inserted into the internal bore of the pipe to be connected 1 so that a through hole 1 b that has previously been formed in the pipe 1 is aligned with the screw hole 16 of the connecting inset portion 12; the stop bolt 3 inserted in the connecting inset portion 12 is tightened with a tool inserted from the through hole 1 b of the pipe 1 to make the conical portion 3a enter the hole 21 of the tapered sleeve 2, with the result that the tapered sleeve 2 is pulled by an amount of the misalignment to increase the connecting inset portion 12 in diameter by wedge effect of the tapered portion for diameter expansion 20, and the pipe 1 is then crimped and fixed from the inside to be connected.

A fourth aspect of the invention provides the pipe joint according to the third aspect, wherein the through hole 1 b that has previously been formed in the pipe 1 has a minimum diameter to allow the tool to be inserted and turn the stop bolt 3 that has been put into the screw hole 16 of the connecting inset portion 12; wherein the stop bolt 3 has an entire length including the conical portion 3a, which is equal to or slightly more than an entire length of the screw hole 16 of the connecting inset portion 12; and wherein the hole 21 formed in the front part of the tapered sleeve 2 is a tapered hole that follows the shape of the conical portion 3a of the stop bolt 3.

A fifth aspect of the invention provides a pipe joint including a joint body 11 in which one or more connecting inset portions 12 extending from the joint body 11 and each inserted in an internal bore of a corresponding pipe to be connected 1 are each formed to have a hollow structure, a plurality of long slit-like splits are formed in each of the connecting inset portions 12 in a circumferential direction to axially extend from an end of the corresponding connecting inset portion 12, and the connecting inset portion 12 is further provided in a hollow interior thereof with a tapered portion 14 having an internal diameter decreasing from the end thereof toward the joint body 11; a tapered sleeve 2 to be inserted in the hollow interior of the connecting inset portion 12; and a stop bolt 3 having a conical portion 3a in an end portion thereof, wherein the tapered sleeve 2 to be inserted in the hollow interior of the connecting inset portion 12 has a rear part in which a tapered portion for diameter expansion 20 is formed, which has a diameter smaller than an external diameter of the connecting inset portion 12 and is brought into internal contact with the tapered portion 14 formed in the hollow interior of the connecting inset portion 12, and the tapered sleeve 2 further has a front part in which a screw hole 22 formed through the tapered sleeve 2 so as to extend orthogonally to an axis of the tapered sleeve 2; wherein a through hole 18 is formed in the joint body 11 orthogonally to an axis of the joint body 11, the through hole 18 being located in a position reached by the screw hole 22 of the tapered sleeve 2 that has been inserted in the hollow interior of the connecting inset portion 12 up to a given position but so as to be slightly misaligned in a direction of inserting the tapered sleeve 2, and wherein the stop bolt 3 is previously put into the screw hole 22 of the tapered sleeve 2 until sinking into an outer circumferential surface of the tapered sleeve 2; the tapered sleeve 2 is inserted into the hollow interior of the connecting inset portion 12 up to the given position; the connecting inset portion 12 is inserted into the internal bore of the pipe to be connected 1; and the stop bolt 3 of the tapered sleeve 2 is tightened with a tool inserted from the through hole 18 of the joint body 11 to make the conical portion 3a enter the hole 18a of the joint body 11, with the result that the tapered sleeve 2 is pulled by an amount of the misalignment to increase the connecting inset portion 12 in diameter by wedge effect of the tapered portion for diameter expansions 20, and the pipe 1 is then crimped and fixed from the inside to be connected.

A sixth aspect of the invention provides the pipe joint according to the fifth aspect, wherein the through hole 18 of the joint body 11 is formed as a hole 18 extending from an open end thereof and leading to the screw hole of the tapered sleeve, and a hole 18a extending from the above hole has a bottom and is formed as a tapered hole that follows the shape of the conical portion 3a of the stop bolt 3; and wherein the stop bolt 3 has an entire length including the conical portion 3a, which is equal to or less than an entire length of the screw hole 22 of the tapered sleeve 2.

A seventh aspect of the invention provides a pipe joint including a joint body 11 in which one or more connecting inset portions 12 extending from the joint body 11 and each inserted in an internal bore of a corresponding pipe to be connected 1 are each formed to have a hollow structure, a plurality of long slit-like splits are formed in each of the connecting inset portions 12 in a circumferential direction to axially extend from an end of the corresponding connecting inset portion 12, and the connecting inset portion 12 is further provided in a hollow interior thereof with a tapered portion 14 having an internal diameter decreasing from the end thereof toward the joint body 11; a tapered sleeve 2 to be inserted in the hollow interior of the connecting inset portion 12; and a stop bolt 3 having a conical portion 3a in an end portion thereof; wherein the tapered sleeve 2 to be inserted in the hollow interior of the connecting inset portion 12 has a rear part in which a tapered portion for diameter expansion 20 is formed, which has a diameter smaller than an external diameter of the connecting inset portion 12 and is brought into internal contact with the tapered portion 14 formed in the hollow interior of the connecting inset portion 12, and the tapered sleeve 2 further has a front part in which a screw hole 22 is formed through the tapered sleeve 2 so as to extend orthogonally to an axis of the tapered sleeve 2; wherein a through hole 19 is formed in the connecting inset portion orthogonally to an axis of the connecting inset portion 12, the through hole 19 being located in a position reached by the screw hole 22 of the tapered sleeve 2 that has been inserted in the hollow interior of the connecting inset portion 12 up to a given position but so as to be slightly misaligned in a direction of inserting the tapered sleeve 2; and wherein the stop bolt 3 is previously put in the screw hole 22 of the tapered sleeve 2 until sinking into an outer circumferential surface of the tapered sleeve 2; the tapered sleeve 2 is inserted in the hollow interior of the connecting inset portion 12 up to the given position; the connecting inset portion 12 is inserted in the internal bore of the pipe to be connected 1 so that a through hole 1 b that has previously been formed in the pipe 1 is aligned with the through hole 19 of the connecting inset portion 12; and the stop bolt 3 inserted in the tapered sleeve 2 is tightened with a tool inserted from the through holes 1 b and 19 to make the conical portion 3a enter a hole 19a of the connecting inset portion 12, with the result that the tapered sleeve is pulled by an amount of the misalignment to increase the connecting inset portion 12 in diameter by wedge effect of the tapered portion for diameter expansion, and the pipe 1 is then crimped and fixed from the inside to be connected.

An eighth aspect of the invention provides the pipe joint according to the seventh aspect, wherein the through hole 19 of the connecting inset portion 12 is formed as a hole extending from an open end thereof and leading to the screw hole 22 of the tapered sleeve 2, and a hole 19a extending from the above hole has a bottom and is formed as a tapered hole that follows the shape of the conical portion 3a of the stop bolt 3; wherein the through hole 1 b that has previously been formed in the pipe 1 has a minimum diameter to allow the tool to be inserted and turn the stop bolt 3 that has been put into the screw hole 22 of the tapered sleeve 2; and wherein the stop bolt 3 has an entire length including the conical portion 3a, which is equal to or less than an entire length of the screw hole 22 of the tapered sleeve 2.

A ninth aspect of the invention provides a pipe joint including a joint body 11 in which one or more connecting inset portions 12' extending from the joint body 11 and each inserted in an internal bore of a corresponding pipe to be connected 1 are each formed to have a hollow structure, and an outer circumferential surface of the joint body 11 has a tapered shape; a pin sleeve 2' to be inserted in the hollow interior of the corresponding connecting inset portion 12', a split sleeve 40 including one axial split 41, having an inner circumferential surface in a tapered shape identical to the tapered shape of an outer circumferential surface of the connecting inset portion 12' and an outer circumferential surface that has a substantially uniform external diameter in internal contact with the internal bore of the pipe 1; and a stop bolt 3 having a conical portion 3a in an end portion thereof; wherein the pin sleeve 2' to be inserted in the hollow interior of the connecting inset portion 12' has a rear part in which a flange-shaped head 23 is formed, and further has a front part in which a hole 21 inserted with the conical portion 3a of the stop bolt is formed orthogonally to an axis of the pin sleeve, wherein a screw hole 15 is formed in the joint body 11 orthogonally to an axis of the joint body 11, the screw hole 15 being located in a position reached by the hole 21 of the pin sleeve 2' that has been inserted in the hollow interior of the connecting inset portion 12' up to a given position but so as to be slightly misaligned in a direction of inserting the pin sleeve 2'; and wherein the split sleeve 40 is fitted to the outer circumferential surface of the connecting inset portion 12' so that the tapered shape of the split sleeve 40 and that of the connecting inset portion 12' coincide with each other; the pin sleeve 2' is inserted into the hollow interior of the connecting inset portion up to the given position; the connecting inset portion 12' is inserted in the internal bore of the pipe to be connected 1; the stop bolt 3 is put into the screw hole 15 of the joint body 11 to make the conical portion 3a of the stop bolt 3 enter the hole 21 of the pin sleeve 2', with the result that the pin sleeve 2' is pulled by an amount of the misalignment; the split sleeve 40 is further moved in the same direction to increase the split sleeve 40 in diameter by inclination of the tapered portion, and the pipe 1 is then crimped and fixed from the inside to be connected.

A tenth aspect of the invention provides the pipe joint according to the ninth aspect, wherein the screw hole 15 of the joint body 11 is formed as a non-through hole leading to the hole of the pin sleeve 2'; wherein the hole 21 formed in the front part of the pin sleeve 2' is a tapered hole that follows the shape of the conical portion 3a of the stop bolt 3; wherein the stop bolt 3 has such length as to sink deep into an outer circumferential surface of the joint body 11 when the conical portion 3a is inserted into the tapered hole 21 of the tapered sleeve 2 to pull the pin sleeve 2' by the amount of the misalignment; and wherein the tapered shape of the inner circumferential surface of the split sleeve 40 is of such size that a rear end of the split sleeve 40 protrudes from an end of the connecting inset portion 12' in a position where the split sleeve 40 is fitted onto the outer circumferential surface of the connecting inset portion 12' so that the tapered shape of the split sleeve 40 and that of the connecting inset portion 12' coincide with each other, and is of such length that the split sleeve 40 is out of contact with a base of the connecting inset portion 12' when pulled by the pin sleeve by an amount of the misalignment.

An eleventh aspect of the invention provides a pipe joint including a joint body 11 in which one or more connecting inset portions 12' extending from the joint body 11 and each inserted in an internal bore of a corresponding pipe to be connected 1 are each formed to have a hollow structure, and an outer circumferential surface of the joint body 11 has a tapered shape; a pin sleeve 2' to be inserted in the hollow interior of the connecting inset portion 12'; a split sleeve 40 with one axial split 41, which has an inner circumferential portion in a tapered shape identical to the tapered shape of the outer circumferential surface of the connecting inset portion 12' and an outer circumferential surface with a substantially uniform external diameter that is in internal contact with the internal bore of the pipe 1; and a stop bolt 3 having a conical portion 3a in an end portion thereof; wherein the pin sleeve 2' to be inserted in the hollow interior of the connecting inset portion 12' has a rear end in which a flange-shaped head is formed and a front part in which a hole 21 inserted with the conical portion 3a of the stop bolt 3 is formed orthogonally to an axis of the pin sleeve 2'; wherein a screw hole 16 is formed in the connecting inset portions 12' orthogonally to an axis of the corresponding connecting inset portion 12', the screw hole 16 being located in a position reached by the hole 21 of the pin sleeve 2' that has been inserted in the hollow interior of the connecting inset portion 12' up to a given position but so as to be slightly misaligned in a direction of inserting the pin sleeve 2'; and wherein the split sleeve 40 is fitted to the outer circumferential surface of the connecting inset portion 12' so that the tapered shape of the split sleeve 40 and that of the connecting inset portion 12' coincide with each other; the pin sleeve 2' is inserted into the hollow interior of the connecting inset portion up to the given position; the stop bolt 3 is put into the screw hole 16 of the connecting inset portion 12' until a rear end of the stop bolt 3 sinks to a position where the pipe 1 can be inserted; the connecting inset portion 12' is then inserted into the internal bore of the pipe to be connected 1 so that a through hole 1 b that has previously been formed in the pipe 1 is aligned with the screw hole 16 of the connecting inset portion 12'; the stop bolt 3 inserted in the connecting inset portion 12' is tightened with a tool inserted from the through hole 1 b of the pipe 1 to make the conical portion 3a enter the hole 21 of the pin sleeve 2', with the result that the pin sleeve 2' is pulled by an amount of the misalignment; the split sleeve 40 is further moved in the same direction to increase the split sleeve 40 in diameter by inclination of the tapered portion, and the pipe 1 is then crimped and fixed from the inside to be connected.

A twelfth aspect of the invention provides the pipe joint according to the eleventh aspect, wherein the through hole 1 b that has previously formed in the pipe 1 has a minimum diameter to allow the tool to be inserted and turn the stop bolt 3 that has been put into the screw hole 16 of the connecting inset portion 12'; wherein the stop bolt 3 has an entire length including the conical portion 3a, which is equal to or slightly more than an entire length of the screw hole 16 of the connecting inset portion 12'; wherein the hole 21 formed in the front part of the pin sleeve 2' is a tapered hole that follows the shape of the conical portion 3a of the stop bolt 3; and wherein the screw hole 16 of the connecting inset portion 12' is located close to a base of the connecting inset portion 12'.

A thirteenth aspect of the invention provides the pipe joint according to any one of the aspects 1 to 12, wherein the joint body 11 has an outline of the same shape and size as the pipe 1.

Since the joint according to the invention is an internal type that inserts the connecting inset portion 12 extending from the joint body 11 into the internal bore of the pipe to be connected 1, the joint body 11 is inconspicuous. Therefore, the joint is excellent in appearance design when connecting the pipe 1.

The stop bolt 3 for pulling the tapered sleeve 2 or 2' is used as means for surely increasing the strength of connecting the pipe 1 to the necessary extent. In the invention according to the third and fourth aspects or the fifth and sixth aspects, and the eleventh and twelfth aspects, the hole 1 b with a diameter smaller than the external diameter of the stop bolt 3 certainly prevents the stop bolt 3 from falling out. This completely dispels the concern that the stop bolt 3 may come off and fall out in a long in-service period. Consequently, the joint according to the invention can be suitably used even in food industry that is intolerant of the possibility that foreign material may get mixed into the food.

In addition, according to the joint of the invention, the pipe 1 can be disconnected without difficulty by loosening the stop bolt 3 with a screw-turning tool such as a wrench 4. This makes the joint excellent in recycling efficiency.

### BRIEF DESCRIPTION OF THE DRAWINGS

FIG. 1 is an exploded perspective view showing a joint of the invention according to Embodiment 1;
FIG. 2 is a plan view showing pipe connection using the joint;
FIG. 3 is a sectional view, taken along line A--A of FIG. 2;
FIG. 4 is a perspective view of a variation in which a joint body is modified in shape;
FIG. 5A is a perspective view of a variation in which a joint body is modified in shape;
FIG. 5B is a perspective view of a variation in which a joint body is modified in shape;
FIG. 6A is a perspective view of a variation in which a joint body is modified in shape;
FIG. 6B is a perspective view of a variation in which a joint body is modified in shape;
FIG. 7 is a sectional view of a joint of the invention according to Embodiment 2 in a use state;
FIG. 8 is a sectional view of a joint of the invention according to Embodiment 3 in a use state;
FIG. 9 is a sectional view of a joint of the invention according to Embodiment 4 in a use state;
FIG. 10 is an exploded perspective view of a joint of the invention according to Embodiment 5;
FIG. 11 is a sectional view showing pipe connection using the joint;
FIG. 12 is an exploded perspective view of a joint of the invention according to Embodiment 6; and
FIG. 13 is a sectional view of pipe connection using the joint.

### DETAILED DESCRIPTION OF THE PREFERRED EMBODIMENTS

A joint 10 includes a joint body 11 in which one or more connecting inset portions 12 extending from the joint body 11 and each inserted in an internal bore 1 a of a corresponding pipe to be connected 1 are each formed to have a hollow structure, a plurality of long slit-like splits 13 are circumferentially formed in each of the connecting inset portions 12 to axially extend from an end of the corresponding connecting inset portion 12, and the connecting inset portions 12 is provided in a hollow interior thereof with a tapered portion 14 having an internal diameter decreasing from the end thereof toward the joint body 11; a tapered sleeve 2 to be inserted in the hollow interior of the connecting inset portion 12; and a stop bolt 3 having a conical portion 3a in an end portion thereof.

In a rear part of the tapered sleeve 2 to be inserted in the hollow interior of the connecting inset portion 12, there is formed a tapered portion for diameter expansion 20 having a diameter smaller than an external diameter of the connecting inset portion 12 and brought into internal contact with the tapered portion 14 formed in the hollow interior of the connecting inset portion 12. Also in a front part of the tapered sleeve 2, a hole 21 to be inserted with the conical portion 3a of the stop bolt 3 is formed orthogonally to an axis of the tapered sleeve 2.

A screw hole 15 is formed in the joint body 11 orthogonally to an axis of the joint body 11. The screw hole 15 is located in a position reached by the hole 21 of the tapered sleeve 2 that has been inserted in the hollow interior of the connecting inset portion 12 up to a given position but so as to be slightly misaligned in a direction of inserting the tapered sleeve 2.

First, the tapered sleeve 2 is inserted in the hollow interior of the connecting inset portion 12 up to the given position, and the connecting inset portion 12 is subsequently inserted in the internal bore 1a of the pipe to be connected 1. Secondly, the stop bolt 3 is put into the screw hole 15 of the joint body 11 so that the conical portion 3a of the stop bolt 3 enters the hole 21 of the tapered sleeve 2, to thereby pull the tapered sleeve 2 by an amount of the misalignment. As a result, the connecting inset portion 12 is increased in diameter by wedge effect of the tapered portion for diameter expansion 20. The pipe 1 is consequently crimped and fixed from the inside to be connected to the joint body 11. Since the tapered sleeve 2 is pulled into the connecting inset portion 12, the stop bolt 3 is applied with force acting orthogonally to a bolt-escaping direction and a frictional force. This creates large resistance that prevents the stop bolt 3 from coming loose and falling out.

### Embodiment 1

The invention will be described below according to embodiments illustrated in the drawings.

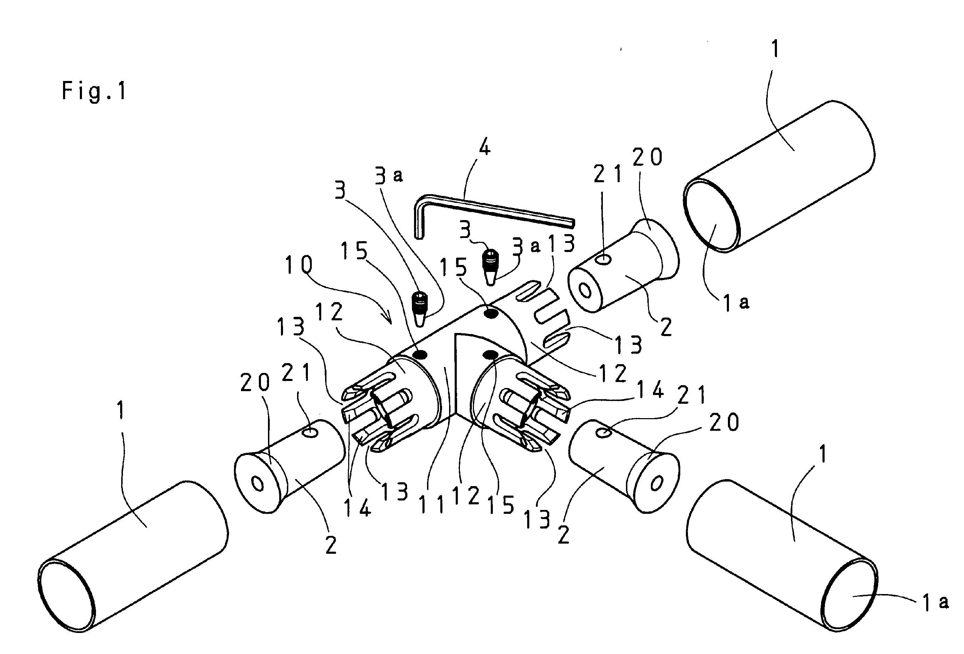

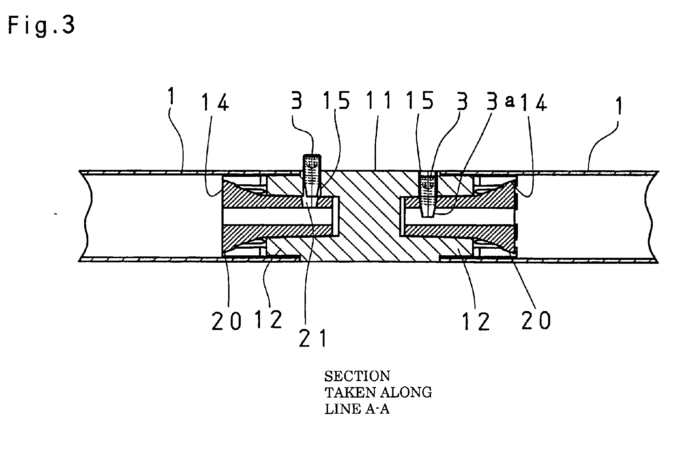

FIGS. 1 to 3 show an embodiment of the invention according to the first and second aspects. In a pipe joint 10 of the embodiment, three connecting inset portions 12, according to the embodiment shown in FIG. 1, which extend from a joint body 11 and are inserted in internal bores 1a of respective pipes to be connected 1, are each formed to have a hollow structure. A plurality of long slit-like splits 13 are formed in each of the connecting inset portions 12 at substantially regular intervals as viewed in a circumferential direction so as to axially extend from an end of the corresponding connecting inset portion 12 almost over an entire length of the connecting inset portion 12. This provides the connecting inset portion 12 with radial flexibility. The flexibility of the connecting inset portion 12 makes it easy to fit the connecting inset portion 12 into an internal bore 1 a of a corresponding pipe 1, and is also convenient for facilitating diameter expansion by wedge effect of a tapered portion for diameter expansion which is formed in a tapered sleeve 2 mentioned below. As is apparent from FIG. 3, for example, the connecting inset portion 12 is provided in a hollow interior thereof with a tapered portion 14 having an internal diameter decreasing from the end thereof toward the joint body 11. The joint 10 has the tapered sleeve 2 to be inserted in the hollow interior of the connecting inset portion and a stop bolt 3 including a conical portion 3a in an end portion thereof.

In a rear part of the tapered sleeve 2 to be inserted in the hollow interior of the connecting inset portion 12, there is formed a tapered portion for diameter expansion 20 which has a diameter smaller than an external diameter of the connecting inset portion 12 and is brought into substantially tight internal contact with the tapered portion 14 formed in the hollow interior of the connecting inset portion 12 as illustrated in FIG. 3. In a front part of the tapered sleeve 2, there is formed a hole 21 in which the conical portion 3a of the stop bolt 3 is inserted orthogonally to an axis of the tapered sleeve 2 as illustrated in FIG. 3.

The joint body 11 includes a screw hole 15 that extends orthogonally to an axis of the joint body 11. The screw hole 15 is located in a position reached by the hole 21 of the tapered sleeve 2 that has been inserted in the hollow interior of the connecting inset portion 12 up to a given position (predetermined position) but so as to be slightly misaligned in a direction of inserting the tapered sleeve 2 (see the left-side part of FIG. 3).

A method of connecting the pipe 1 using the joint 10 thus constructed will be described below.

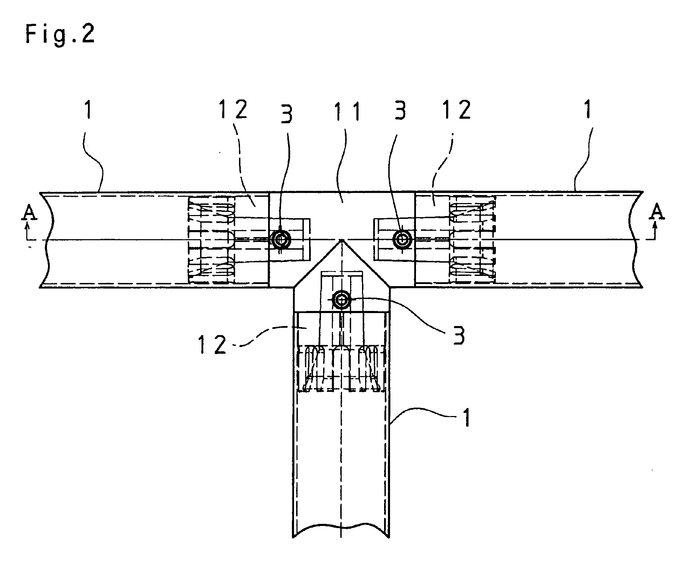

First, the tapered sleeve 2 is inserted into the hollow interior of the corresponding connecting inset portion 12 up to the given position (predetermined position). After a center alignment is carried out between the hole 21 formed in the front part of the tapered sleeve 2 and the screw hole 15 of the joint body 11, the connecting inset portion 12 is inserted into the internal bore 1a of the corresponding pipe to be connected 1. Secondly, the stop bolt 3 having the conical portion 3a in the end portion thereof is firmly tightened into the screw hole 15 of the joint body 11 with a screw-turning tool such as a wrench 4 shown in FIG. 1 so that the conical portion 3a enters the hole 21 of the tapered sleeve 2. As a result, the tapered sleeve 2 is pulled by an amount of the misalignment between the screw hole 15 and the hole 21. In proportion to the pulling amount, the tapered portion for diameter expansion 20 moves into the tapered portion 14 of the connecting inset portion 12, thereby exerting the wedge effect that bends the connecting inset portion 12 in a radial outward direction. In other words, an end portion of the connecting inset portion 12 is increased in diameter as a whole, so that a bore surface of the pipe 1 is crimped hard from the inside and fixed by frictional force. Consequently, the pipe 1 can be firmly connected to the joint body 11. FIG. 2 shows a state in which three pipes 1 are connected to the joint body 11 in the above-described manner.

According to Embodiment 1, the screw hole 15 formed in the joint body 11 is a hole that is open only at an upper end and reaches the hollow interior so as to lead to the hole 21 of the tapered sleeve 2 as illustrated in FIG. 3. In order to connect the three pipes 1, the joint body 11 is provided with three screw holes 15 located close to the respective connecting inset portion 12, and open ends of the screw holes 15 are seen. This provides the advantage that an external design is good as a joint, and that there are not many concave portions that are prone to gather dust.

The joint body 11 has an outline of the same shape and size as the pipe 1. That is to say, the joint body 11 has such a structure that no step, which is caused by different diameters, is produced between the joint body 11 and the pipe 1. In this respect, too, the external design of a pipe-connecting structure is good. In addition, because of the connecting structure that scarcely gathers dust, the joint 10 is suitable to be used in food industry that is intolerant of dust.

Embodiment 1 illustrated in the drawings has such a design that both the pipe 1 and the joint body 11 have a generally circular outline. In stead of the circular shape, however, it is possible to carry out Embodiment 1 with a square or polygonal outline. These matters will also apply to other embodiments described below.

The hole 21 of the tapered sleeve 2 in Embodiment 1 is a tapered hole that follows the shape of the conical portion 3a of the stop bolt 3 (that is, substantially the same shape and size) as is evident especially from the left-side part of FIG. 3. For this reason, in spite that the screw hole 15 and the tapered hole 21 are slightly misaligned with each other, the conical portion 3a of the stop bolt 3 smoothly enters the tapered hole 21. Both the conical portion 3a and the tapered hole 21 are brought into almost line or surface contact with each other, and pulls the tapered sleeve 2 into the hollow interior of the connecting inset portion 12 by the amount of the misalignment without difficulty. In this way, the screw hole 15 and the tapered hole 21 contribute a firm connection between the pipe 1 and the joint body 11.

The stop bolt 3 has such length that the rear end (upper end) thereof becomes a flush surface with or sinks a little deep into the outer circumferential surface of the joint body 11 as illustrated in the right-side part of FIG. 3 when the tapered potion 3a enters the hole 21 of the tapered sleeve 2 to the necessary extent. Accordingly, the connecting structure of the pipe 1 and the joint body 11 is not obtrusive in appearance, and has not any protrusions having unpleasant touch. In this respect, Embodiment 1 has an excellent design and is comfortable in use.

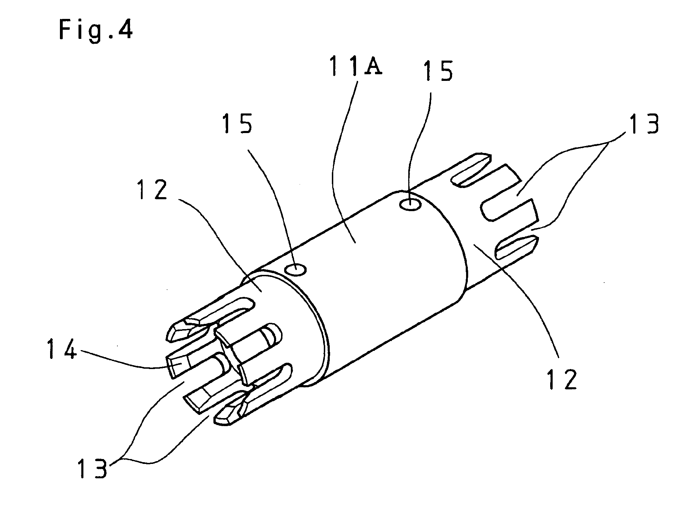

FIGS. 4, 5 and 6 show design forms of the joint body 11, and more specifically, a basic form of the joint body 11 and main variations of the design form, in which the number of connecting inset portions 12 extending to be connected to pipes 1 and the extending directions of the connecting inset portions 12 are varied.

First, a joint body 11A illustrated in FIG. 4 has a shape of a straight tube. Two connecting inset portions 12 extend from respective ends of the joint body 11A.

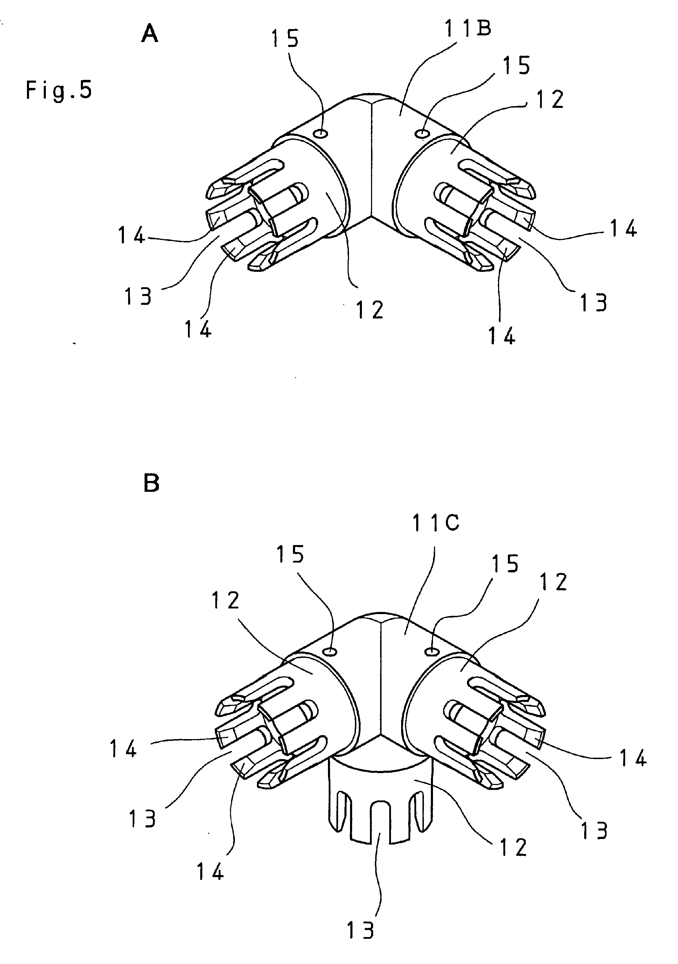

The joint body 11B illustrated in FIG. 5A is of a so-called elbow type that is bent substantially at a right angle. Two connecting inset portions 12 extend from respective ends of the joint body 11B.

A joint body 11C illustrated in FIG. 5B is of a three-axis type having an elbowed portion that is bent substantially at a right angle in a horizontal direction and a portion stretching in a perpendicularly downward (or upward) direction. Three connecting inset portions 12 extend from respective ends of the joint body 11C.

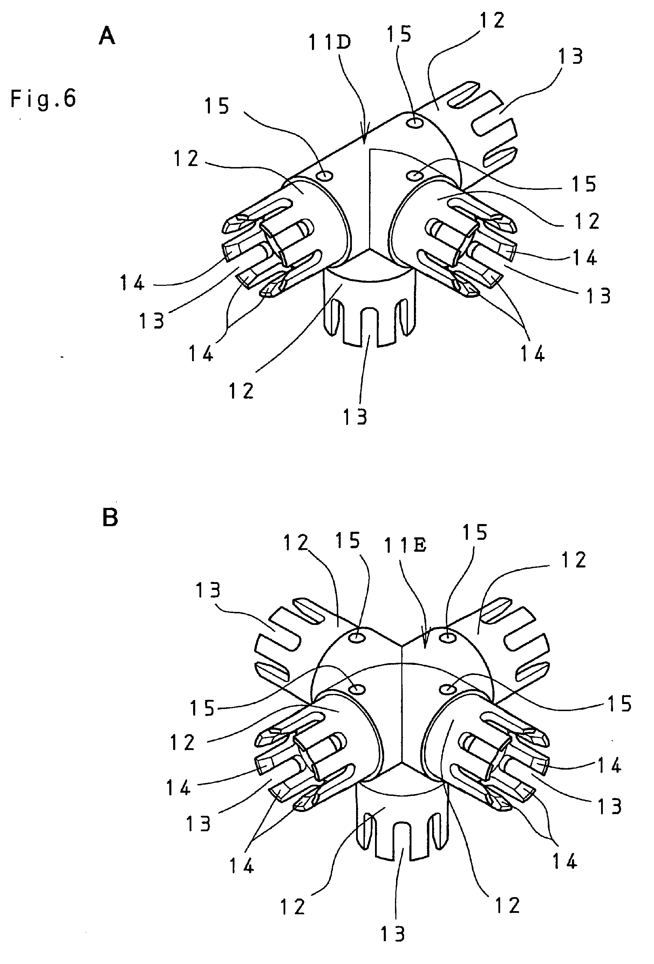

A joint body 11D illustrated in FIG. 6A is of a three-axis type having a so-called T-shaped portion stretching in a horizontal direction and a portion stretching in a perpendicularly downward (or upward) direction. Four connecting inset portions 12 extend from respective ends of the joint body 11D.

A joint body 11E illustrated in FIG. 6B is of a three-axis type having portions stretching in a horizontal direction to cross each other at right angles and a portion stretching in a perpendicularly downward (or upward) direction. Five connecting inset portions 12 extend from respective ends of the joint body 11E.

The above-described variations of the design form are merely specific examples of the basic form of the joint body 11 and the forms in which the number of connecting inset portions 12 and the direction in which the connecting inset portions 12 extend from the joint body 11 are different, and are not limited to the foregoing.

The same design variations will also apply to other embodiments described below.

### Embodiment 2

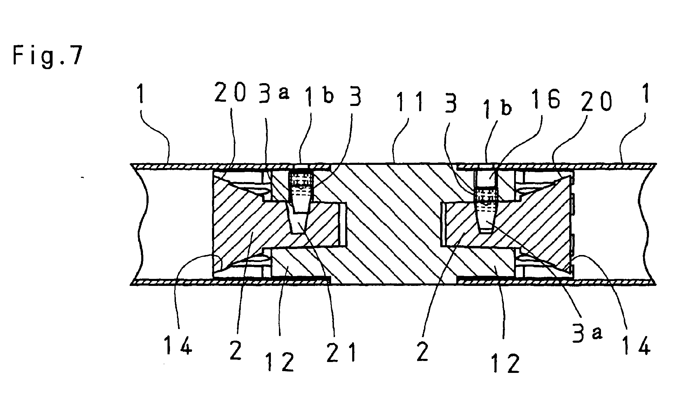

FIG. 7 shows an embodiment of the invention according to the third and fourth aspects.

A joint of Embodiment 2 (FIG. 7) has a basic structure identical in many points to Embodiment 1. To be concrete, a connecting inset portion 12 extending from a joint body 11 and inserted in an internal bore of a pipe to be connected 1 is formed to have a hollow structure. The connecting inset portion 12 has a plurality of long slit-like splits circumferentially arranged at substantially regular intervals so as to axially extend from an end of the connecting inset portion 12. In a hollow interior of the connecting inset portion 12, there is formed a tapered portion 14 having an internal diameter decreasing from the end thereof toward the joint body 11. The joint includes a tapered sleeve 2 to be inserted in the hollow interior of the connecting inset portion 12 of the joint body 11 and a stop bolt 3 having a conical portion 3a in an end portion thereof.

In Embodiment 2, as in Embodiment 1, the tapered sleeve 2 to be inserted in the hollow interior of the connecting inset portion 12 of the joint body 11 is provided in a rear part with a tapered portion for diameter expansion 20 which has a diameter smaller than an external diameter of the connecting inset portion 12 and is brought into internal contact with the tapered portion 14 formed in the hollow interior of the connecting inset portion 12. In a front part (shaft portion) of the tapered sleeve 2, a hole 21 to be inserted with a conical portion 3a of a stop bolt 3 is formed orthogonally to an axis of the tapered sleeve 2. The hole 21 shown in FIG. 7 is formed as a tapered hole that follows the shape of the conical portion 3a of the stop bolt 3.

According to Embodiment 2, a screw hole 16 is formed in the connecting inset portion 12 orthogonally to an axis of the connecting inset portion 12 to run through to the hollow interior. The screw hole is located in a position reached by the hole 21 of the tapered sleeve 2 that has been inserted in the hollow interior of the connecting inset portion 12 up to a given position (predetermined position) but so as to be slightly misaligned in a direction of inserting the tapered sleeve 2. Therefore, in Embodiment 2, when the connecting inset portion 12 is interfitted in the pipe 1, the screw hole 16 is hidden by the pipe 1, and so is the stop bolt 3 that has been put into the screw hole 16.

In order to tighten the stop bolt 3 in the screw hole 16, the pipe 1 is previously provided in a required place with a through hole 1 b that allows a screw-turning tool, such as the wrench 4 shown in FIG. 1 as an example, to pass therethrough.

A method for connecting the pipe 1 using the joint thus constructed will be described below.

To connect the pipe 1 by using the joint of Embodiment 2, the tapered sleeve 2 is first inserted into the hollow interior of the connecting inset portion 12 up to the given position (predetermined position), and center alignment is carried out between the hole 21 formed in the front part of the tapered sleeve 2 and the screw hole 16 of the connecting inset portion 12. The stop bolt 3 having the conical portion 3a in the end portion thereof is put into the screw hole 16 of the connecting inset portion 12 so that at least a rear end of the stop bolt 3 sinks into an outer circumferential surface of the connecting inset portion 12. The connecting inset portion 12 is subsequently inserted into the internal bore of the pipe 1, and the through hole 1 b that has previously been formed in the pipe 1 is aligned with the screw hole 16 (see the left-side part of the FIG. 7). Thereafter, the wrench 4 is inserted through the through hole 1b, and the stop bolt 3 in the screw hole 16 of the connecting inset portion 12 is tightened to make the conical portion 3a enter the tapered hole 21 of the tapered sleeve 2. By so doing, the tapered sleeve 2 is pulled by the stop bolt 3 by an amount of the misalignment. The connecting inset portion 12 is increased in diameter due to a wedge effect of the tapered portion for diameter expansion 20, and is then crimped and fixed to the pipe 1 from the inside. A firm connection between the pipe 1 and the joint body 11 can be thus achieved as in Embodiment 1.

In Embodiment 2, the through hole 1 b that has previously been formed in the pipe 1 preferably has a minimum diameter to allow the screw-turning tool such as the wrench 4 to be inserted and turn the stop bolt 3 that has been put into the screw hole 16 of the connecting inset portion 12 as illustrated in FIG. 7 (the through hole 1 b has a diameter of about 3 mm, for example, when the stop bolt 3 has an external diameter of about 6 mm). This makes the through hole 1 b unnoticeable and therefore provides a good design in terms of appearance of the pipe 1. Furthermore, the through hole 1 b is not likely to gather dust. More importantly, since the diameter of the through hole 1 b is smaller than the external diameter of the stop bolt 3, even if the stop bolt 3 comes loose and is backed off, the rear end of the bolt 3 hits against a bore surface of the pipe 1. As a result, and the bolt 3 is mechanically prevented from being further backed off, and there is no such concern that the bolt 3 may fall out.

For a practical reason, the stop bolt 3 of Embodiment 2 has an entire length including the conical portion 3a, which is slightly more than an entire length of the screw hole 16 of the connecting inset portion 12 (see the left-side part of FIG. 7).

The hole 21 formed in the front part of the tapered sleeve 2 is a tapered hole that follows the shape of the conical portion 3a of the stop bolt 3. The point of doing so is as described under Embodiment 1.

### Embodiment 3

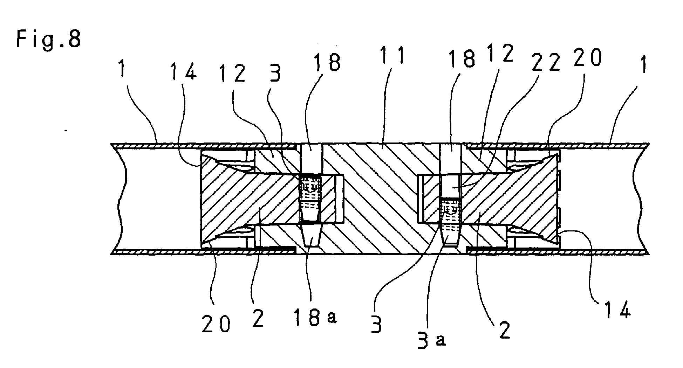

FIG. 8 shows an embodiment of the invention according to the fifth and sixth aspects.

A joint of Embodiment 3 has a basic structure identical in many points to Embodiments 1 and 2. More specifically, a connecting inset portion 12 extending from a joint body 11 and inserted in an internal bore of a pipe to be connected 1 is formed to have a hollow structure. The connecting inset portion 12 also has a plurality of long slit-like splits that are circumferentially arranged to axially extend from an end of the connecting inset portion 12. The connecting inset portion 12 is provided in a hollow interior thereof with a tapered portion 14 having an internal diameter decreasing from the end thereof toward the joint body. The joint includes a tapered sleeve 2 to be inserted in the hollow interior of the connecting inset portion 12 of the joint body 11 and a stop bolt 3 having a conical portion 3a in an end portion thereof.

In a rear part of the tapered sleeve 2 to be inserted in the hollow interior of the connecting inset portion 12, there is formed a tapered portion for diameter expansion 20 which has a diameter smaller than an external diameter of the connecting inset portion 12 and is brought into internal contact with the tapered portion 14 formed in the hollow interior of the connecting inset portion 12. In a front part of the tapered sleeve 2, a screw hole 22 is formed through the tapered sleeve 2 orthogonally to an axis of the tapered sleeve 2.

The joint body 11 includes a through hole 18 formed orthogonally to an axis of the joint body 11. The through hole 18 is located in a position reached by the screw hole 22 of the tapered sleeve 2 that has been inserted in the hollow interior of the connecting inset portion 12 up to a given position but so as to be slightly misaligned in a direction of inserting the tapered sleeve 2.

To connect the pipe 1 by using the joint of Embodiment 3, first of all, a stop bolt 3 is previously put into the screw hole 22 of the tapered sleeve 2 and is brought into a position sinking into the outer circumferential surface of the tapered sleeve 2. The tapered sleeve 2 in the above-mentioned state is inserted into the hollow interior of the connecting inset portion 12 up to the given position, and the hole 18 of the joint body 11 is aligned with the screw hole 22. The connecting inset portion 12 is inserted into the internal bore of the pipe 1. A screw-turning tool such as the wrench 4 shown in FIG. 1 is inserted through the through hole 18 of the joint body 11 to tighten the stop bolt 3 inserted in the tapered sleeve 2, to thereby make the conical portion 3a of the stop bolt 3 enter a hole 18a of the joint body 11. As a result, the tapered sleeve 2 is pulled by an amount of the misalignment. The connecting inset portion 12 is then increased in diameter due to a wedge effect of the tapered portion for diameter expansion 20. Consequently, the connecting inset portion 12 is crimped and fixed to the inside of the pipe 1, which makes it possible to firmly connect the pipe 1.

In the joint according to Embodiment 3, as clearly seen in the left-side part of FIG. 8, the through hole 18 of the joint body 11 leads from an upper open end thereof to the screw hole 22 of the tapered sleeve 2, whereas the lower hole 18a located on an extended line of the hole 18 has a bottom. The hole 18a is also formed as a tapered hole that follows the shape of the tapered potion 3a of the stop bolt 3. Accordingly, the through hole 18 formed in the joint body 11 needs only one open end. This improves an external design of the joint body 11 and provides an operation of pulling the tapered sleeve 2 by the amount of the misalignment. Moreover, there is an advantage of reducing places liable to gather dust.

The stop bolt 3 according to Embodiment 3 is formed under such a use condition that an entire length including the conical portion 3a is set equal to or less than an entire length of the screw hole 22 of the tapered sleeve 2 as clearly illustrated in the left-side part of FIG. 8.

### Embodiment 4

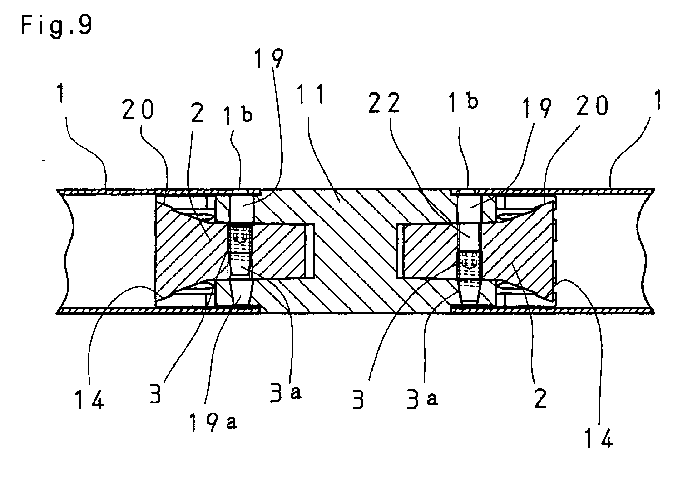

FIG. 9 shows an embodiment of the invention according to the seventh and eighth aspects.

A joint of Embodiment 4 is, so to speak, a combination of Embodiments 2 and 3, so that it has a structure common in many points with Embodiments 2 and 3. To be more specific, a connecting inset portion 12 extending from a joint body 11 and inserted in an internal bore of a pipe to be connected 1 is formed to have a hollow structure. The connecting inset portion 12 has a plurality of long slit-like splits circumferentially arranged to axially extend from an end of the connecting inset portion 12. In a hollow interior of the connecting inset portion 12, there is formed a tapered portion 14 having an internal diameter decreasing from the end thereof toward the joint body 11. The joint includes a tapered sleeve 2 to be inserted in the hollow interior of the connecting inset portion 12 of the joint body 11 and a stop bolt 3 having a conical portion 3a in an end portion thereof.

In a rear part of the tapered sleeve 2 to be inserted in the hollow interior of the connecting inset portion 12, there is formed a tapered portion for diameter expansion 20 which has a diameter smaller than an external diameter of the connecting inset portion 12 and is brought into internal contact with the tapered portion 14 formed in the hollow interior of the connecting inset portion 12. In a front part of the tapered sleeve 2, a screw hole 22 is formed through the tapered sleeve 2 orthogonally to an axis of the tapered sleeve 2.

The connecting inset portion 12 is provided with a through hole 19 that extends orthogonally to an axis of the connecting inset portion 12. The through hole 19 is located in a position reached by the screw hole 22 of the tapered sleeve 2 that has been inserted in the hollow interior of the connecting inset portion 12 up to a given position but so as to be slightly misaligned in a direction of inserting the tapered sleeve 2.

To connect the joint thus constructed and the pipe 1 to each other, first of all, the stop bolt 3 is previously put into the screw hole 22 of the tapered sleeve 2. As illustrated in the left-side part of FIG. 9, after the stop bolt 3 is caused to sink completely into an outer circumferential surface of the tapered sleeve 2, the tapered sleeve 2 is inserted into the hollow interior of the connecting inset portion 12 up to the given position. The screw hole 22 is aligned with the through hole 19 of the connecting inset portion 12. The connecting inset portion 12 is subsequently inserted into the internal bore of the pipe 1 so that a through hole 1 b that has previously been formed in the pipe 1 is aligned with the hole 19 of the connecting inset portion 12. A screw-turning tool such as the wrench 4 is inserted from the through hole 1 b of the pipe 1 through the hole 19 of the connecting inset portion 12, and the stop bolt 3 inserted in the tapered sleeve 2 is tightened and installed with the wrench 4, to thereby insert the conical portion 3a into a hole 19a of the connecting inset portion 12. By so doing, the tapered sleeve 2 is pulled by an amount of the misalignment. The connecting inset portion 12 is increased in diameter due to a wedge effect of the tapered portion for diameter expansion 20, and is then crimped and fixed to the pipe 1. Consequently, the pipe 1 can be firmly connected.

In the joint according to Embodiment 4, as clearly illustrated in the left-side part of FIG. 9, the through hole 19 of the connecting inset portion 12 is formed as a through hole communicating with the screw hole 22 of the tapered sleeve 2 in a portion between an upper open end thereof and the hollow interior. The lower hole 19a formed on an extended line of the hole 19 is a tapered hole that follows the shape of the conical portion 3a of the stop bolt 3. This is suitable for pulling the tapered sleeve 2 by the amount of the misalignment.

According to Embodiment 4, the through holes 19 and 19a formed in the connecting inset portion 12 are covered with the pipe 1 at the time point when inserted into the pipe 1 and cannot be viewed from outside. The through hole 1 b that has previously been formed in the pipe 1 has a minimum diameter to allow a screw-turning tool to be inserted and turn the stop bolt 3 that has been put into the screw hole 22 of the tapered sleeve 2. For this reason, the through hole 1 b that is viewed in the appearance of a pipe-connecting structure is inconspicuous, which provides a good design and reduces places liable to gather dust. If the stop bolt 3 comes loose and is backed off, the pipe 1 mechanically and entirely prevents the stop bolt 3 from falling out.

As clearly illustrated in the left-side part of FIG. 9, the stop bolt 3 of Embodiment 4 has an entire length including the conical portion 3a which is equal to or less than an entire length of the screw hole 22 of the tapered sleeve 2.

### Embodiment 5

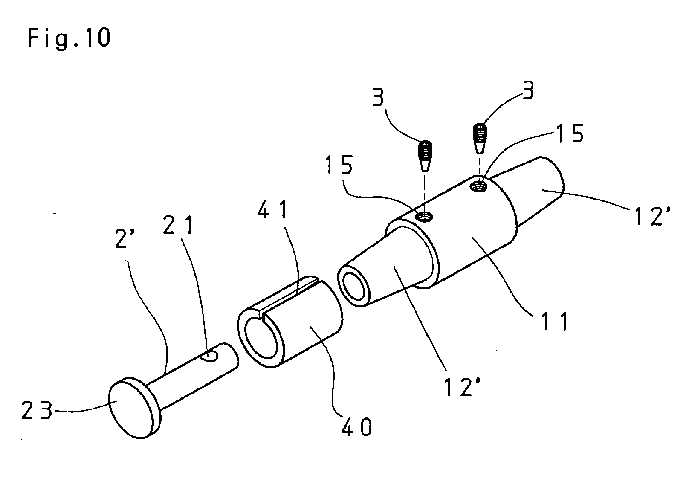

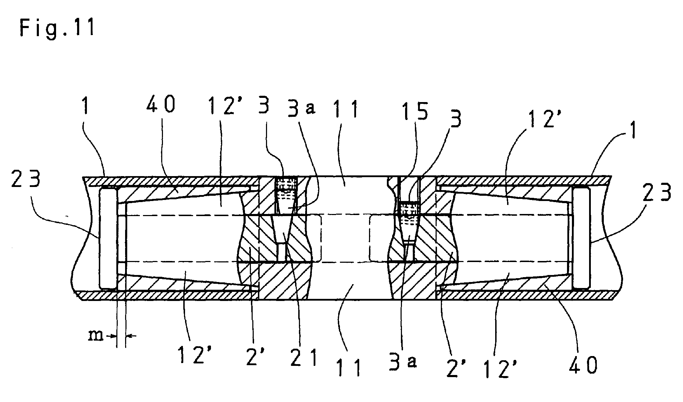

FIGS. 10 and 11 show an embodiment of the invention according to the ninth and tenth aspects.

In a joint of Embodiment 5, as symbolically illustrated in FIG. 10, two connecting inset portions 12' extending from a joint body 11 and inserted in internal bores of respective pipes to be connected 1 are each formed to have a hollow structure. Each of the connecting inset portions 12' has an outer circumferential surface in a tapered shape. The joint includes a pin sleeve 2' to be inserted in a hollow interior of the connecting inset portion 12' of the joint body 11, a split sleeve 40 with one axial split 41, which has an inner circumferential surface in a tapered shape identical to the tapered shape of the outer circumferential surface of the connecting inset portion 12' and an outer circumferential surface with a substantially uniform external diameter that is in internal contact with the internal bore of the pipe 1 (see FIG. 11), and a stop bolt 3 having a conical portion 3a in an end portion thereof.

The pin sleeve 2' to be inserted in the hollow interior of the connecting inset portion 12' has a rear part provided with a simple flange-shaped head 23. In a front part of the pin sleeve 2', there is formed a hole 21 into which the conical portion 3a of the stop bolt 3 is inserted orthogonally to an axis of the pin sleeve.

A screw hole 15 is formed in the joint body 11 orthogonally to an axis of the joint body 11. The screw hole 15 is located in a position reached by the hole 21 of the pin sleeve 2' that has been inserted in the hollow interior of the connecting inset portion 12' up to a given position but so as to be slightly misaligned in a direction of inserting the pin sleeve 2'.

To connect the joint of Embodiment 5 and the pipe 1 to each other, first of all, the split sleeve 40 is fitted to the outer circumferential surface of the connecting inset portion 12' up to the position where the tapered shape of the split sleeve 40 coincides with that of the connecting inset portion 12'. Secondly, the pin sleeve 2' is inserted into the hollow interior up to the given position so that the hole 21 formed in the front part of the pin sleeve 2' is aligned with the screw hole 15 of the joint body 11. The connecting inset portion 12' is subsequently inserted into the internal bore of the pipe 1. The stop bolt 3 is put into the screw hole 15 of the joint body 11 so as to make the conical portion 3a of the stop bolt 3 enter the hole 21 of the pin sleeve 2'. The pin sleeve 2' is then pulled by an amount of the misalignment, which makes the split sleeve 40 move in the same direction. As a result, the split sleeve 40 is increased in diameter due to inclination of the tapered portion. Consequently, the pipe 1 is crimped and fixed from the inside, thereby being firmly connected.

In the joint of Embodiment 5, as illustrated in FIG. 11, the screw hole 15 formed in the joint body 11 is a non-through hole leading to the hole 21 of the pin sleeve 2' (half-through hole reaching the hollow interior). Therefore, the screw hole 15 has one open end.

The hole 21 formed in the front part of the pin sleeve 2' is a tapered hole that follows the shape of the conical portion 3a of the stop bolt 3. This makes it possible to smoothly and reliably pull the pin sleeve 2' by the amount of the misalignment.

The stop bolt 3 has such length as to sink deep into the outer circumferential surface of the joint body 11 when the conical portion 3a is inserted into the tapered hole 21 of the pin sleeve 2', and the pin sleeve 2' is pulled by the amount of the misalignment. Therefore, the stop bolt 3 is not protruding from the outer circumferential surface of the joint body 11, which provides a good external design.

As illustrated in the left-side part of FIG. 11, the tapered shape of the inner circumferential surface of the split sleeve 40 is of such size that a rear end of the split sleeve 40 projects from the end of the connecting inset portion 12' only by length m that is a several mm in the position where the split sleeve 40 is fitted to the outer circumferential surface of the connecting inset portion 12' so as to fit the tapered shapes of the both. The tapered shape of the inner circumferential surface of the split sleeve 40 also has such length that, even if the split sleeve 40 is pulled by the pin sleeve 2' by the amount of the misalignment, the split sleeve 40 is out of contact with a base of the connecting inset portion 12', that is, a boundary step between the split sleeve 40 and the joint body 11. It is then possible to easily and reliably carry out the pulling operation using the pin sleeve 2' by the amount of the misalignment.

### Embodiment 6

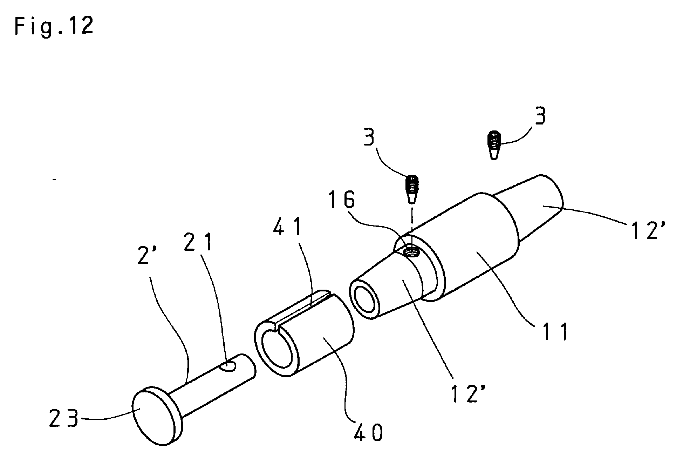

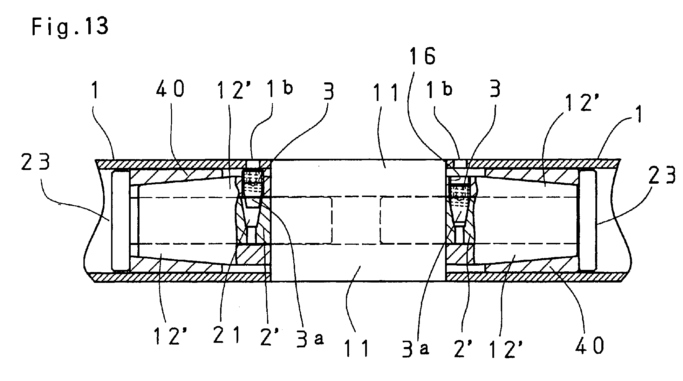

FIGS. 12 and 13 show an embodiment of the invention according to the eleventh and twelfth aspects.

A joint of Embodiment 6 differs from that of Embodiment 5 although a screw hole 16 for being inserted with a stop bolt 3 is formed in a connecting inset portion 12' of a joint body 11.

The connecting inset portion 12' extending from the joint body 11 and inserted in an internal bore of a pipe to be connected 1 is also formed to have a hollow structure. The connecting inset portion 12' has an outer circumferential surface in a tapered shape. The joint includes a pin sleeve 2' to be inserted in a hollow interior of the connecting inset portion 12' of the joint body 11, a split sleeve 40 with one axial split 41, which has an inner circumferential surface in a tapered shape identical to the tapered shape of an outer circumferential surface of the connecting inset portion 12' and an outer circumferential surface with a substantially uniform external diameter that is in internal contact with the internal bore of the pipe 1, and a stop bolt 3 having a conical portion 3a in an end portion thereof.

A flange-shaped head 23 is formed in a rear end of the pin sleeve 2' to be inserted in the hollow interior of the connecting inset portion 12'. The pin sleeve 2' is also provided in a front part thereof with a hole 21 for being inserted with the conical portion 3a of the stop bolt 3 orthogonally to an axis of the pin sleeve 2'.

A screw hole 16 is formed in the connecting inset portion 12' orthogonally to an axis of the connecting inset portion 12'. The screw hole 16 is located in a position reached by the hole 21 of the pin sleeve 2' that has been inserted in the hollow interior of the connecting inset portion 12' up to a given position but so as to be slightly misaligned in a direction of inserting the pin sleeve 2'.

To connect the joint of Embodiment 6 and the pipe 1 to each other, first of all, the split sleeve 40 is fitted to the outer circumferential surface of the connecting inset portion 12' up to a position where the tapered shapes of the both coincide with each other. The pin sleeve 2' is inserted into the hollow interior of the connecting inset portion 12' up to the given position. Center alignment of the hole 21 of the pin sleeve 2' and the screw hole 16 of the connecting inset portion 12' is carried out. The stop bolt 3 is put into the screw hole 16 of the connecting inset portion 12' until a rear end (external end) of the stop bolt 3 is screwed down to a position where the pipe 1 is insertable. In this state, the connecting inset portion 12' is inserted into the internal bore of the pipe 1, and a through hole 1 b that has previously been formed in the pipe 1 is aligned with the screw hole 16 of the connecting inset portion 12'. In the next place, the stop bolt 3 inserted in the connecting inset portion 12' is tightened by a screw-turning tool such as the wrench 4 which is inserted from the through hole 1 b of the pipe 1. In this manner, the conical portion 3a is inserted into the hole 21 of the pin sleeve 2'. This causes the pin sleeve 2' to be pulled by an amount of the misalignment, and the split sleeve 40 moves in the same direction. As a result, the split sleeve 40 is increased in diameter due to inclination of the tapered portion. Consequently, the pipe 1 is crimped and fixed from the inside to be firmly connected.

In the joint of Embodiment 6, the through hole 1 b that has previously been formed in the pipe 1 has a minimum diameter to allow a tool such as the wrench 4 to be inserted and turn the stop bolt 3 that has been put in the screw hole 16 of the connecting inset portion 12'. Therefore, the through hole 1 b that is viewed in an appearance of a pipe-connecting structure is inconspicuous, so that the design is excellent. In the event that the stop bolt 3 comes loose and is backed off, the stop bolt 3 is mechanically and entirely prevented by the pipe 1 from falling out.

The stop bolt 3 of Embodiment 6 has an entire length including the conical portion 3a, which is equal to or slightly more than an entire length of the screw hole 16 of the connecting inset portion 12'.

The hole 21 formed in the front part of the pin sleeve 2' is a tapered hole that follows the shape of the conical portion 3a of the stop bolt 3. Accordingly, the pin sleeve 2' can be easily and reliably pulled by the amount of the misalignment.

Embodiment 6 has a structure in which the screw hole 16 of the connecting inset portion 12 is formed as close to a base of the connecting inset portion 12' as possible, and is exposed in a more inward position than at least an inner end of the split sleeve 40.

Although the invention has been described above with reference to the embodiments illustrated in the drawings, the invention is not thus limited but is susceptible of design changes, and other modifications and application, which are made by those skilled in the art as needed.

## Claims

1. A pipe joint comprising a joint body in which one or more connecting inset portions extending from the joint body and each inserted in an internal bore of a corresponding pipe to be connected are each formed to have a hollow structure, a plurality of long slit-like splits are formed in each of the connecting inset portions in a circumferential direction to axially extend from an end of the corresponding connecting inset portion, and the connecting inset portion is further provided in a hollow interior thereof with a tapered portion having an internal diameter decreasing from the end thereof toward the joint body; a tapered sleeve to be inserted in the hollow interior of the connecting inset portion; and a stop bolt having a conical portion in an end portion thereof, wherein:
the tapered sleeve to be inserted in the hollow interior of the connecting inset portion has a rear part in which a tapered portion for diameter expansion is formed, which has a diameter smaller than an external diameter of the connecting inset portion and is brought into internal contact with the tapered portion formed in the hollow interior of the connecting inset portion, and the tapered sleeve further has a front part in which a hole to be inserted with the conical portion of the stop bolt is formed orthogonally to an axis of the tapered sleeve, wherein:
a screw hole is formed in the joint body orthogonally to an axis of the joint body, the screw hole being located in a position reached by the hole of the tapered sleeve that has been inserted in the hollow interior of the connecting inset portion up to a given position but so as to be slightly misaligned in a direction of inserting the tapered sleeve, and wherein:
the tapered sleeve is inserted in the hollow interior of the connecting inset portion up to the given position; the connecting inset portion is inserted in the internal bore of the pipe to be connected; and the stop bolt is put into the screw hole of the joint body to make the conical portion of the stop bolt enter the hole of the tapered sleeve, with the result that the tapered sleeve is pulled by an amount of the misalignment to increase the connecting inset portion in diameter by wedge effect of the tapered portion for diameter expansion, and the pipe is then crimpled and fixed from the inside to be connected.

2. The pipe joint according to claim 1, wherein:
the screw hole formed in the joint body is a non-through hole leading to the hole of the tapered sleeve;
the hole of the tapered sleeve is a tapered hole that follows the shape of the conical portion of the stop bolt; and
the stop bolt has such length as to sink deep into an outer circumferential surface of the joint body when the conical portion is inserted into the tapered hole of the tapered sleeve to pull the tapered sleeve by the amount of the misalignment.

3. A pipe joint comprising a joint body in which one or more connecting inset portions extending from the joint body and each inserted in an internal bore of a corresponding pipe to be connected are each formed to have a hollow structure, a plurality of long slit-like splits are formed in each of the connecting inset portions in a circumferential direction to axially extend from an end of the corresponding connecting inset portion, and the connecting inset portion is further provided in a hollow interior thereof with a tapered portion having an internal diameter decreasing from the end thereof toward the joint body; a tapered sleeve to be inserted in the hollow interior of the connecting inset portion; and a stop bolt having a conical portion in an end portion thereof, wherein:
the tapered sleeve to be inserted in the hollow interior of the connecting inset portion has a rear part in which a tapered portion for diameter expansion is formed, which has a diameter smaller than an external diameter of the connecting inset portion and is brought into internal contact with the tapered portion formed in the hollow interior of the connecting inset portion, and the tapered sleeve further has a front part in which a hole to be inserted with the conical portion of the stop bolt is formed orthogonally to an axis of the tapered sleeve, wherein:
a screw hole is formed in the connecting inset portion orthogonally to an axis of the connecting inset portion, the screw hole being located in a position reached by the hole of the tapered sleeve that has been inserted in the hollow interior of the connecting inset portion up to a given position but so as to be slightly misaligned in a direction of inserting the tapered sleeve, and wherein:
the tapered sleeve is inserted in the hollow interior of the connecting inset portion up to the given position; the stop bolt is put into the screw hole of the connecting inset portion until sinking into an outer circumferential surface of the connecting inset portion; the connecting inset portion is inserted into the internal bore of the pipe to be connected so that a through hole that has previously been formed in the pipe is aligned with the screw hole of the connecting inset portion; and the stop bolt inserted in the connecting inset portion is tightened with a tool inserted from the through hole of the pipe to make the conical portion enter the hole of the tapered sleeve, with the result that the tapered sleeve is pulled by an amount of the misalignment to increase the connecting inset portion in diameter by wedge effect of the tapered portion for diameter expansion, and the pipe is then crimped and fixed from the inside to be connected.

4. The pipe joint according to claim 3, wherein:
the through hole that has previously been formed in the pipe has a minimum diameter to allow the tool to be inserted and turn the stop bolt that has been put into the screw hole of the connecting inset portion;
the stop bolt has an entire length including the conical portion, which is equal to or slightly more than an entire length of the screw hole of the connecting inset portion; and
the hole formed in the front part of the tapered sleeve is a tapered hole that follows the shape of the conical portion of the stop bolt.

5. A pipe joint comprising a joint body in which one or more connecting inset portions extending from the joint body and each inserted in an internal bore of a corresponding pipe to be connected are each formed to have a hollow structure, a plurality of long slit-like splits are formed in each of the connecting inset portions in a circumferential direction to axially extend from an end of the corresponding connecting inset portion, and the connecting inset portion is further provided in a hollow interior thereof with a tapered portion having an internal diameter decreasing from the end thereof toward the joint body; a tapered sleeve to be inserted in the hollow interior of the connecting inset portion; and a stop bolt having a conical portion in an end portion thereof, wherein:
the tapered sleeve to be inserted in the hollow interior of the connecting inset portion has a rear part in which a tapered portion for diameter expansion is formed, which has a diameter smaller than an external diameter of the connecting inset portion and is brought into internal contact with the tapered portion formed in the hollow interior of the connecting inset portion, and the tapered sleeve further has a front part in which a screw hole is formed through the tapered sleeve so as to extend orthogonally to an axis of the tapered sleeve, wherein:
a through hole is formed in the joint body orthogonally to an axis of the joint body, the through hole being located in a position reached by the screw hole of the tapered sleeve that has been inserted in the hollow interior of the connecting inset portion up to a given position but so as to be slightly misaligned in a direction of inserting the tapered sleeve, and wherein:
the stop bolt is previously put into the screw hole of the tapered sleeve until sinking into an outer circumferential surface of the tapered sleeve; the tapered sleeve is inserted into the hollow interior of the connecting inset portion up to the given position; the connecting inset portion is inserted into the internal bore of the pipe to be connected; and the stop bolt inserted in the tapered sleeve is tightened with a tool inserted from the through hole of the joint body to make the conical portion enter the hole of the joint body, with the result that the tapered sleeve is pulled by an amount of the misalignment to increase the connecting inset portion in diameter by wedge effect of the tapered portion for diameter expansion, and the pipe is then crimped and fixed from the inside to be connected.

6. The pipe joint according to claim 5, wherein:
the through hole of the joint body is formed as a hole extending from an open end thereof and leading to the screw hole of the tapered sleeve, and a hole extending from the above hole has a bottom and is formed as a tapered hole that follows the shape of the conical portion of the stop bolt; and
the stop bolt has an entire length including the conical portion, which is equal to or less than an entire length of the screw hole of the tapered sleeve.

7. A pipe joint comprising a joint body in which one or more connecting inset portions extending from the joint body and each inserted in an internal bore of a corresponding pipe to be connected are each formed to have a hollow structure, a plurality of long slit-like splits are formed in each of the connecting inset portions in a circumferential direction to axially extend from an end of the corresponding connecting inset portion, and the connecting inset portion is further provided in a hollow interior thereof with a tapered portion having an internal diameter decreasing from the end thereof toward the joint body; a tapered sleeve to be inserted in the hollow interior of the connecting inset portion; and a stop bolt having a conical portion in an end portion thereof, wherein:
the tapered sleeve to be inserted in the hollow interior of the connecting inset portion has a rear part in which a tapered portion for diameter expansion is formed, which has a diameter smaller than an external diameter of the connecting inset portion and is brought into internal contact with the tapered portion formed in the hollow interior of the connecting inset portion, and the tapered sleeve further has a front part in which a screw hole is formed through the tapered sleeve so as to extend orthogonally to an axis of the tapered sleeve, wherein:
a through hole is formed in the connecting inset portion orthogonally to an axis of the connecting inset portion, the through hole being located in a position reached by the screw hole of the tapered sleeve that has been inserted in the hollow interior of the connecting inset portion up to a given position but so as to be slightly misaligned in a direction of inserting the tapered sleeve, and wherein:
the stop bolt is previously put into the screw hole of the tapered sleeve until sinking into an outer circumferential surface of the tapered sleeve; the tapered sleeve is inserted into the hollow interior of the connecting inset portion up to the given position; the connecting inset portion is inserted into the internal bore of the pipe to be connected so that a through hole that has previously been formed in the pipe is aligned with the through hole of the connecting inset portion; and the stop bolt inserted in the tapered sleeve is tightened with a tool inserted from the through holes to make the conical portion enter the hole of the connecting inset portion, with the result that the tapered sleeve is pulled by an amount of the misalignment to increase the connecting inset portion in diameter by wedge effect of the tapered portion for diameter expansion, and the pipe is then crimped and fixed from the inside to be connected.

8. The pipe joint according to claim 7, wherein:
the through hole of the connecting inset portion is formed as a hole extending from an open end thereof and leading to the screw hole of the tapered sleeve, and a hole extending from the above hole has a bottom and is formed as a tapered hole that follows the shape of the conical portion of the stop bolt, wherein:
the through hole that has previously been formed in the pipe has a minimum diameter to allow the tool to be inserted and turn the stop bolt that has been put into the screw hole of the tapered sleeve, and wherein:
the stop bolt has an entire length including the conical portion, which is equal to or less than an entire length of the screw hole of the tapered sleeve.

9. A pipe joint comprising a joint body in which one or more connecting inset portions extending from the joint body and each inserted in an internal bore of a corresponding pipe to be connected are each formed to have a hollow structure, and an outer circumferential surface of the joint body has a tapered shape; a pin sleeve to be inserted in a hollow interior of the corresponding connecting inset portion; a split sleeve with one axial split, which has an inner circumferential surface in a tapered shape identical to the tapered shape of an outer circumferential surface of the connecting inset portion and an outer circumferential surface that has a substantially uniform external diameter that is in internal contact with the internal bore of the pipe; and a stop bolt having a conical portion in an end portion thereof, wherein:
the pin sleeve to be inserted in the hollow interior of the connecting inset portion has a rear part in which a flange-shaped head is formed and a front part in which a hole inserted with the conical portion of the stop bolt is formed orthogonally to an axis of the pin sleeve, wherein:
a screw hole is formed in the joint body orthogonally to an axis of the joint body, the screw hole being located in a position reached by the hole of the pin sleeve that has been inserted in the hollow interior of the connecting inset portion up to a given position but so as to be slightly misaligned in a direction of inserting the pin sleeve, and wherein:
the split sleeve is fitted to the outer circumferential surface of the connecting inset portion so that the tapered shape of the split sleeve and that of the connecting inset portion coincide with each other; the pin sleeve is inserted into the hollow interior of the connecting inset portion up to the given position; the connecting inset portion is inserted into the internal bore of the pipe to be connected; the stop bolt is put into the screw hole of the joint body to make the conical portion of the stop bolt enter the hole of the pin sleeve, with the result that the pin sleeve is pulled by an amount of the misalignment; the split sleeve is further moved in the same direction to increase the split sleeve in diameter by inclination of the tapered portion, and the pipe is then crimpled and fixed from the inside to be connected.

10. The pipe joint according to claim 9, wherein:
the screw hole of the joint body is formed as a non-through hole leading to the hole of the pin sleeve, and the hole formed in the front part of the pin sleeve is a tapered hole that follows the shape of the conical portion of the stop bolt, wherein:
the stop bolt has such length as to sink deep into an outer circumferential surface of the joint body when the conical portion is inserted into the tapered hole of the pin sleeve to pull the pin sleeve by the amount of the misalignment, and wherein:
the tapered shape of the inner circumferential surface of the split sleeve is of such size that a rear end of the split sleeve protrudes from an end of the connecting inset portion in a position where the split sleeve is fitted onto the outer circumferential surface of the connecting inset portion so that the tapered shape of the split sleeve and that of the connecting inset portion coincide with each other, and is of such length that the split sleeve is out of contact with a base of the connecting inset portion when pulled by the pin sleeve by an amount of the misalignment.

11. A pipe joint comprising a joint body in which one or more connecting inset portions extending from the joint body and each inserted in an internal bore of a corresponding pipe to be connected are each formed to have a hollow structure, and an outer circumferential surface of the joint body has a tapered shape; a pin sleeve to be inserted in a hollow interior of the connecting inset portion; a split sleeve with one axial split, which has an inner circumferential surface in a tapered shape identical to the tapered shape of an outer circumferential surface of the connecting inset portion and an outer circumferential surface with a substantially uniform external diameter that is in internal contact with the internal bore of the pipe; and a stop bolt having a conical portion in an end portion thereof, wherein:
the pin sleeve to be inserted in the hollow interior of the connecting inset portion has a rear end in which a flange-shaped head is formed and a front part in which a hole inserted with the conical portion of the stop bolt is formed orthogonally to an axis of the pin sleeve, wherein:
a screw hole is formed in the connecting inset portion orthogonally to an axis of the connecting inset portion, the screw hole being located in a position reached by the hole of the pin sleeve that has been inserted in the hollow interior of the connecting inset portion up to a given position but so as to be slightly misaligned in a direction of inserting the pin sleeve, and wherein:
the split sleeve is fitted to the outer circumferential surface of the connecting inset portion so that the tapered shape of the split sleeve and that of the connecting inset portion coincide with each other; the pin sleeve is inserted into the hollow interior of the connecting inset portion up to the given position; the stop bolt is put into the screw hole of the connecting inset portion until a rear end of the stop bolt sinks to a position where the pipe can be inserted; the connecting inset portion is then inserted into the internal bore of the pipe to be connected so that a through hole that has previously been formed in the pipe is aligned with the screw hole of the connecting inset portion; the stop bolt inserted in the connecting inset portion is tightened with a tool inserted from the through hole of the pipe to make the conical portion enter the hole of the pin sleeve, with the result that the pin sleeve is then pulled by an amount of the misalignment; the split sleeve is further moved in the same direction to increase the split sleeve in diameter by inclination of the tapered portion, and the pipe is then crimped and fixed from the inside to be connected.

12. The pipe joint according to claim 11, wherein:
the through hole that has previously been formed in the pipe has a minimum diameter to allow the tool to be inserted and turn the stop bolt that has been put into the screw hole of the connecting inset portion, wherein:
the stop bolt has an entire length including the conical portion thereof, which is equal to or slightly more than an entire length of the screw hole of the connecting inset portion, wherein:
the hole formed in the front part of the pin sleeve is a tapered hole that follows the shape of the conical portion of the stop bolt, and wherein:
the screw hole of the connecting inset portion is located close to a base of the connecting inset portion.

13. The pipe joint according to any one of claims 1 to 12, wherein the joint body has an outline of the same shape and size as the pipe.
